Europäisches Patentamt

**European Patent Office** (11) Veröffentlichungsnummer: **0 175 126**
**B1**

Office européen des brevets

(12) **EUROPÄISCHE PATENTSCHRIFT**

(45) Veröffentlichungstag der Patentschrift:
**18.01.89**

(21) Anmeldenummer: **85109939.0**

(22) Anmeldetag: **07.08.85**

(51) Int. Cl.⁴: **G 05 D 23/19, F 24 D 19/10**

(54) Steuereinrichtung für ein Raum-Heizgerät.

(30) Priorität: **23.08.84 NO 843362**

(43) Veröffentlichungstag der Anmeldung:
**26.03.86 Patentblatt 86/13**

(45) Bekanntmachung des Hinweises auf die Patenterteilung:
**18.01.89 Patentblatt 89/3**

(84) Benannte Vertragsstaaten:
**DE SE**

(56) Entgegenhaltungen:
**EP-A- 0 012 936**
**EP-A- 0 019 344**
**GB-A- 2 091 914**
**US-A- 4 316 577**

(73) Patentinhaber: **Siemens Aktiengesellschaft Berlin und München, Wittelsbacherplatz 2, D-8000 München 2 (DE)**

(72) Erfinder: **Haukaas, Björn, Bergveien 6B, N-2020 Strömmen (NO)**
Erfinder: **Amundsen, Aage-Rolf, Skytterveien 26, N-7080 Heimdal (NO)**

ACTORUM AG

## Beschreibung

Die Erfindung betrifft ein Verfahren zum Steuern der Wärmeleistung eines Raum-Heizgerätes durch Beeinflussung von dessen relativer Einschaltdauer nach dem Oberbegriff des Patentanspruchs 1.

Ein derartiges Steuerverfahren für die Wärmeleistung eines Raum-Heizgerätes ist aus der EP-A1-0 012 936 bekannt. Diese Patentschrift betrifft ein Verfahren zum Optimieren des Energieverbrauchs in Gebäuden mit sich nach einem bestimmten Zeitprogramm ändernden Belegzeiten, wobei durch kontrollierendes Ein- bzw. Ausschalten des Raum-Heizgerätes während der Belegzeiten eine vorgewählte Soll-Temperatur erreicht werden soll. Dabei wird bei jedem Absenkvorgang eine aussentemperaturabhängige Funktion berechnet, die von der gemessenen, tatsächlich benötigten Aufheizzeitspanne zur Erreichung der Soll-Temperatur, dem Temperatur-Sollwert bei Beginn des Aufheizvorganges und der Raumtemperatur bei Beginn des Aufheizvorganges abhängt. Die so gewonnene Funktion wird in einer Tabelle zusammen mit der zugehörigen Aussentemperatur abgespeichert. Auf diese Weise werden im Laufe der Zeit von der aussentemperaturabhängigen Funktion diskrete Tabellenpunkte ermittelt und gespeichert. Für die Berechnung der folgenden Zeitpunkte für die Leistungserhöhung werden die abgespeicherten Tabellenwerte der aussentemperaturabhängigen Funktion verwendet.

Bei einer weiteren, aus der EP-A1-0 019 344 bekannten Steuereinrichtung der vorgenannten Art ist ein Verfahren zur Einsparung von Energiekosten in Gebäuden mit einer nach einem bestimmten Zeitprogramm gegenüber dem Normalbetrieb gedrosselten Energiezufuhr bekannt, bei dem zur Absenkung der Energiezufuhr während vorbestimmbarer Zeitabschnitte und zu deren rechtzeitiger Wiederanhebung zur Erreichung einer Soll-Temperatur rechtzeitig vor Beendigung einer Absenkperiode, der Zeitpunkt des Beginns der Wiederanhebung der Energiezufuhr nicht nur in Abhängigkeit von der Aussentemperatur, sondern auch von weiteren Wärmeverluste verursachenden Parametern, beispielsweise Windverhältnissen, Wärmeisolation der Aussenwände, Dichtheit von Fenstern und Türen usw. gesteuert wird. Dazu soll ein sogenannter äquivalenter Aussentemperaturwert ermittelt werden, aufgrund dessen der Wiedereinschaltzeitpunkt der Energiezufuhr vor dem Ende einer Absenkperiode ermittelt wird. Der Wert für die äquivalente Aussentemperatur soll mathematisch aus dem Quotienten des gemessenen Integralwertes der Energiezufuhr, bezogen auf einen ausgewählten Zeitabschnitt während der Dauer der normalen Heizperiode, gebildet werden.

Mit diesen bekannten Steuerverfahren wird durch selbsttätige Optimierung erreicht, dass bei einem Absenkvorgang eine Erhöhung der Energiezufuhr gerade so erfolgt, dass am Ende der Absenkzeitspanne wieder der Raumtemperatur-Sollwert erreicht wird. Zur Durchführung dieser bekannten Steuerverfahren ist jedoch ein Aussentemperaturfühler erforderlich und die angegebenen Rechenoperationen sind verhältnismässig aufwendig.

Aus der GB-A-2 091 914 ist darüber hinaus eine programmierbare Steuereinheit für ein Heizungs- oder Kühlsystem bekannt, das zeitsteuerbare Mittel enthält, welche die lineare Temperaturperiode während vorwählbarer Zeitintervalle unterbricht und während der Dauer der Unterbrechung die Energiezufuhr so beeinflusst, dass während der Unterbrechungszeiten vorbestimmbare, von thermoempfindlichen Elementen regelbare, gegenüber dem Normaltemperaturwert geänderte Temperaturwerte erreicht werden.

Eine weitere zeitgesteuerte Einrichtung der vorbeschriebenen Art ist aus der US-A-4 316 577 bekannt. Dabei handelt es sich um eine zeitsteuerbare Temperaturregeleinrichtung für Raumheizungen, bei der unterschiedliche Temperaturniveaus während vorbestimmter Zeiten thermostatisch geregelt einstellbar sind. Dabei sind die einzelnen Perioden speicherbar und visuell anzeigbar.

Der Erfindung liegt die Aufgabe zugrunde, ein Steuerverfahren der eingangs genannten Art so auszuführen, dass die gewünschte selbsttätige Optimierung der Energieeinsparung durch den Absenkbetrieb ohne Aussentemperaturfühler erreicht wird.

Diese Aufgabe wird durch die im Patentanspruch 1 angegebene Erfindung gelöst.

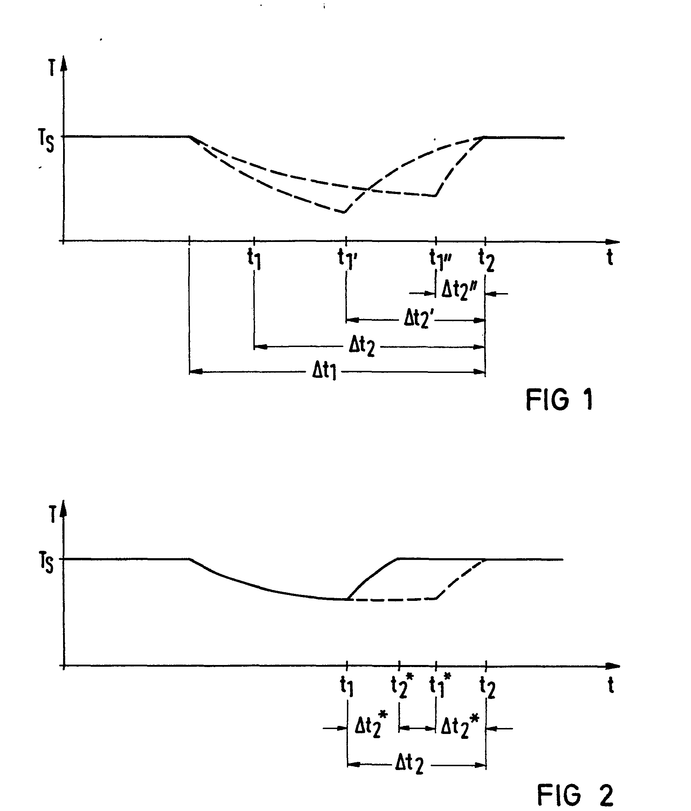

Die Erfindung wird nachfolgend beispielhaft anhand der Figuren 1 und 2 näher erläutert.

Fig. 1 zeigt den Verlauf der Raumtemperatur T über die Zeit t. Im Normalbetrieb wird die Wärmeleistung des Raumheizgerätes so geregelt, dass ein Raumtemperatur-Sollwert $T_S$ eingehalten wird. Während einer Absenkzeitspanne $\triangle t_1$, beispielsweise während der Nacht, soll jedoch die Raumtemperatur aus Energieersparnisgründen abgesenkt werden. Dazu wird die Wärmeleistung des Raum-Heizgerätes verringert, evtl. sogar auf Null herabgesetzt. Damit sinkt die Raumtemperatur in Abhängigkeit von Gebäudeparametern (z.B. Isolierung, Speicherfähigkeit) und äusseren Witterungsverhältnissen (z.B. Aussentemperatur, Windverhältnisse) ab. Zum Ende der Absenkzeitspanne $\triangle t_1$ soll wieder der Raumtemperatur-Sollwert $T_S$ erreicht werden. Dazu ist eine Aufheizzeitspanne $\triangle t_2$ erforderlich, die wiederum von äusseren Witterungsverhältnissen und Gebäudeparametern abhängig ist. Damit hängt also auch der Zeitpunkt $t_1$, an dem wieder eine Leistungserhöhung erfolgen muss, um rechtzeitig den Raumtemperatur-Sollwert zu erreichen, von den Gebäudeparametern und äusseren Witterungseinflüssen ab. Dies ist in der Fig. 1 dadurch angedeutet, dass verschiedene Zeitpunkte $t_1$, $t_1'$, $t_1''$ und Aufheizzeitspannen $\triangle t_2$, $\triangle t_2'$, $\triangle t_2''$ eingezeichnet sind.

Durch eine selbstoptimierende Steuereinrichtung soll nun erreicht werden, dass diese stets den richtigen Zeitpunkt $t_1$ zur Leistungserhöhung

wählt, so dass der Raumtemperatur-Sollwert möglichst genau am Ende der Absenkzeitspanne $\triangle t_1$ erreicht wird. Ein zu spätes Erreichen des Raumtemperatur-Sollwertes würde eine Komforteinbusse bedeuten, ein zu frühes Erreichen einen unnötigen Energieverlust. Diese Selbstoptimierung erfolgt aufgrund einer Abspeicherung von Erfahrungswerten, wie im folgenden anhand der Fig. 2 erläutert wird. Bei Inbetriebsetzung der Steuereinrichtung können zunächst noch keine Erfahrungswerte vorhanden sein. Die für diese Erfahrungswerte vorgesehenen Speicher werden daher so vorprogrammiert, dass die Aufheizzeitspanne $\triangle t_2$ gleich der Hälfte der Absenkzeitspanne $\triangle t_1$ ist. Der sich damit ergebende Temperaturverlauf ist in Fig. 2 mit durchgezogener Linie gezeichnet. Im allgemeinen erreicht dabei die Raumtemperatur bereits zu einem vor dem Ende der Absenkzeitspanne $\triangle t_1$ liegenden Zeitpunkt $t_2{}^*$ ihren Sollwert, so dass nicht die maximal mögliche Energieersparnis erzielt wird. Die tatsächlich benötigte Aufheizzeitspanne $\triangle t_2{}^*$ wird nun in einem Speicher der Steuereinrichtung abgespeichert. Diese Aufheizzeitspanne ist ausser von im allgemeinen gleichbleibenden Gebäudeparametern von den äusseren Witterungsverhältnissen abhängig. Es hat sich jedoch herausgestellt, dass die direkt nur sehr schwer erfassbare Relation zwischen der Aufheizzeitspanne $\triangle t_2$ und den äusseren Witterungsverhältnissen in guter Näherung durch eine Relation zwischen der Aufheizzeitspanne $\triangle t_2$ und der Wärmeleistung des Raumheizgerätes vor Beginn des Absenkvorganges ersetzt werden kann. Diese Wärmeleistung hängt nämlich wiederum von den die Aufheizzeitspanne $\triangle t_2$ beeinflussenden Parametern ab.

Die tatsächlich benötigte Aufheizzeitspanne $\triangle t_2{}^*$ wird also zusammen mit der Wärmeleistung des Raumheizgerätes vor Beginn der Absenkzeitspanne $\triangle t_1$ abgespeichert. Damit liegt also ein Erfahrungswert vor, wie bei einer bestimmten Wärmeleistung des Raumheizgerätes in der nachfolgenden Absenkperiode die Aufheizzeitspanne $\triangle t_2$ optimal zu wählen ist. Der abgespeicherte Wert $\triangle t_2{}^*$ muss lediglich vom Zeitpunkt $t_2$, an dem der Raumtemperatur-Sollwert wieder erreicht sein soll, subtrahiert werden, um zum optimalen Zeitpunkt $t_1{}^*$ für die Leistungserhöhung zu gelangen. Damit erhält man also bei jedem nachfolgenden Absenkvorgang für einen bestimmten Wert der Wärmeleistung den gestrichelt eingezeichneten Verlauf der Raumtemperatur, der eine optimale Energieersparnis gewährleistet.

Dies gilt zunächst nur für eine bestimmte Wärmeleistung. Im Laufe des Betriebes erhält man jedoch immer mehr Wärmeleistungs-Werte mit den zuzuordnenden Aufheizzeitspannen $\triangle t_2$. Zwischen den einzelnen Werten kann interpoliert werden. Die Steuereinrichtung zeigt also ein selbstoptimierendes Verhalten in der Art, dass die Aufheizzeitspannen $\triangle t_2$ im Laufe der Betriebszeit immer exakter vorgegeben werden.

## Patentansprüche

1. Verfahren zum Steuern der Wärmeleistung eines Raum-Heizgerätes durch Beeinflussung von dessen relativer Einschaltdauer derart, dass im Normalbetrieb ein Raumtemperatur-Sollwert eingehalten wird und in einem Absenkbetrieb für eine vorgebbare Absenkzeitspanne $\triangle t_1$, die durch eine Verringerung der Wärmeleistung des Raum-Heizgerätes eingeleitet wird und vor deren Ende zu einem Zeitpunkt $t_1$ wieder eine Leistungserhöhung erfolgt, derart, dass am Ende der Absenkzeitspanne $\triangle t_1$ wieder der Raumtemperatur-Sollwert erreicht wird, dadurch gekennzeichnet, dass beim ersten Absenkvorgang der Zeitpunkt $t_1$ in die Mitte der Absenkzeitspanne $\triangle t_1$ gelegt wird und dass bei den folgenden Absenkvorgängen die tatsächlich vom Zeitpunkt $t_1$ bis zum Erreichen des Raumtemperatur-Sollwertes benötigten Aufheiz-Zeitspannen $\triangle t_2$ zusammen mit dem jeweils gebildeten Mittelwert der Wärmeleistung vor Beginn des Absenkvorganges gespeichert werden und dass bei jedem Absenkvorgang der Zeitpunkt $t_1$ in Abhängigkeit von den gespeicherten Werten der Wärmeleistung und der Aufheizzeitspanne $\triangle t_2$ berechnet wird.

2. Verfahren nach Anspruch 1, dadurch gekennzeichnet, dass als Raum-Heizgerät ein elektrisches Direktheizgerät benutzt ist.

## Revendications

1. Procédé pour commander la puissance thermique d'un appareil de chauffage de locaux par réaction sur sa durée de branchement relative de telle sorte que, pendant le fonctionnement normal, une valeur de consigne de la température ambiante est maintenue et que pendant un fonctionnement avec réduction pendant un intervalle de temps de réduction $\triangle t_1$ pouvant être prédéterminé, qui est déclenché par une réduction de la puissance thermique de l'appareil de chauffage de locaux, et avant l'accroissement de ce fonctionnement, un accroissement de la puissance est à nouveau exécuté à un instant $t_1$ de telle sorte que la valeur de consigne de la température ambiante est à nouveau atteinte à la fin de l'intervalle de temps de réduction $\triangle t_1$, caractérisé par le fait que lors de la première opération de réduction, l'instant $t_1$ est fixé au centre de l'intervalle de temps de réduction $\triangle t_1$ et que lors des opérations suivantes de réduction, les intervalles de temps de chauffage $\triangle t_2$, qui sont effectivement nécessaires depuis l'instant $t_1$ jusqu'à ce que la valeur de consigne de la température ambiante soit atteinte, ainsi que la valeur moyenne respectivement formée de la puissance thermique sont mémorisées avant le début de l'opération de réduction et que lors de chaque opération de réduction, l'instant $t_1$ est calculé en fonction des valeurs mémorisées de la puissance de chauffage et de l'intervalle de temps de chauffage $\triangle t_2$.

2. Procédé suivant la revendication 1, caractérisé par le fait qu'on utilise comme appareil de chauffage de locaux un appareil de chauffage électrique direct.

## Claims

1. Method for the control of the thermal output of a space heating apparatus through influence of the relative ON-duration of the latter such that during normal operation an ambient temperature desired value is observed and during a lowering operation for a lowering time interval $\triangle t_1$, which can be preset and which is initiated through a reduction in the thermal output of the space heating apparatus, and before the end of the latter, at an instant $t_1$, an increase in output takes place again such that at the end of the lowering time interval $\triangle t_1$ the ambient temperature desired value is reached again, characterised in that in the case of the first lowering process the instant $t_1$ is set in the middle of the lowering time interval $\triangle t_1$ and in that in the following lowering processes the heating-up time intervals $\triangle t_2$, actually required from the instant $t_1$ until the ambient temperature desired value is reached, are stored together with the respectively established average value of the thermal output before the start of the lowering process and in that in the case of each lowering process the instant $t_1$ is calculated as a function of the stored values of the thermal output and heating-up time interval $\triangle t_2$.

2. Method according to claim 1, characterised in that an electric direct heating apparatus is used as a space heating apparatus.

FIG 1

FIG 2